# FASCICULE DE BREVET EUROPEEN

(11) **EP 3 286 041 B1**
(45) Date de publication et mention de la délivrance du brevet: **06.02.2019**
(21) Numéro de dépôt: 16715026.7
(22) Date de dépôt: 18.03.2016
(51) Int. Cl.: B60R 19/24

(54) **PATTE DE FIXATION D'UN PARE-CHOCS SUR UNE CAISSE DE VÉHICULE AUTOMOBILE**
KLEMME ZUR BEFESTIGUNG EINES STOSSFÄNGERS AN EINER KRAFTFAHRZEUGKAROSSERIE
LUG FOR ATTACHING A BUMPER TO A MOTOR VEHICLE BODY SHELL

(30) Priorité: 20.04.2015 FR 1553479
(43) Date de publication de la demande: 28.02.2018
(73) Titulaire: PSA AUTOMOBILES S.A., 78300 Poissy (FR)
(72) Inventeur: THOR, Tou, 25150 Bourguignon (FR); CLEREL, Antoine, 74130 Bonneville (FR)
(74) Mandataire: Fernandez, Francis Lionel
(86) Numéro de dépôt international: PCT/FR2016/050608
(87) Numéro de publication internationale: WO 2016/170239

(56) Documents cités:
- FR-A1- 2 931 124

## Description

L'invention a trait à la fixation d'un pare-chocs sur un panneau d'une caisse de véhicule automobile au moyen de pattes de fixation, et plus particulièrement au comportement mécanique de ces pattes de fixation lors d'un choc à basse vitesse.

Un véhicule comprend généralement un pare-chocs avant et un pare-chocs arrière dont la fonction première est respectivement d'amortir les chocs subis par le véhicule.

Lors de la conception d'un véhicule automobile, le constructeur réalise différents essais de choc, plus connus sous l'anglicisme « crash test ». Ces essais permettent, d'une part, de valider le comportement du véhicule en cas de chocs ou de collisions et, d'autre part, d'évaluer les dommages résultants pour les passagers.

On s'intéressera plus particulièrement dans la suite de la description au comportement mécanique d'un pare-chocs lors d'un choc à basse vitesse. Dans la suite de la description, on entend par basse vitesse, une vitesse inférieure à 20 km/h. Pour réaliser ces essais de chocs, le constructeur met en place différents protocoles prédéfinis, dans lesquels notamment la vitesse d'impact et l'angle d'impact varient, le véhicule étant par exemple percuté par un impacteur ou un autre véhicule.

Les constructeurs reproduisent également certains essais réalisés par des organismes tels que le RCAR (acronyme anglais pour "Research Council for Automobil Repair"), le RCAR mettant par exemple en place des essais de chocs normalisés afin d'étudier le comportement du pare-chocs et surtout d'évaluer le coût des réparations engendrées par un choc à basse vitesse. Les résultats sont par exemple utilisés par des groupes d'assurance automobile, afin de catégoriser les différents véhicules.

Pour rester compétitif, les constructeurs essaient donc en permanence de minimiser le coût des réparations nécessaires à la suite d'un choc à basse vitesse.

Le pare-chocs est généralement fixé sur une caisse de véhicule automobile et plus précisément sur un panneau de la caisse, ce panneau ayant une face primaire et une face secondaire opposées. Le pare-chocs est, dans ce cas, fixé au panneau au moyen d'au moins une patte de fixation, le pare-chocs s'étendant en regard de la paroi secondaire, la patte de fixation ayant une partie extrême supérieure par laquelle la patte est fixée sur la face primaire et une partie extrême inférieure par laquelle la patte est solidaire du pare-chocs.

Le pare-chocs est généralement fixé via deux pattes de fixation, chaque patte de fixation s'étendant généralement dans un plan parallèle au plan de symétrie du pare-chocs. La forme des pattes de fixation est par exemple illustrée par le document FR 2 931 124.

Cette fixation du pare-chocs ne va pas sans inconvénients.

Lors d'un choc frontal ou arrière, le déplacement du pare-chocs initié par le choc se répercute sur chaque patte de fixation, chaque patte de fixation sollicitant ainsi le panneau au travers de sa partie extrême supérieure. Lors d'un choc à basse vitesse d'intensité suffisante, on constate à l'issue du choc non seulement une déformation plastique du pare-chocs mais également une déformation plastique de chaque face primaire du panneau. Le fait que le pare-chocs soit déformé plastiquement se traduit par une diminution partielle ou totale de sa capacité d'absorption. Ainsi, lors des réparations, il est nécessaire de remplacer le pare-chocs mais également de redresser les faces primaires du panneau. La main d'oeuvre nécessaire au redressement du panneau représente une part importante du coût des réparations engendrées par le choc.

Un premier objectif est de proposer un ensemble comprenant un pare-chocs fixé sur un panneau d'une caisse de véhicule automobile, cet ensemble minimisant les déformations plastiques du panneau lors d'un choc subi par le pare-chocs à basse vitesse, une basse vitesse étant considérée comme une vitesse inférieure à 20 km/h.

Un second objectif est de proposer un véhicule automobile comprenant un ensemble comportant un pare-chocs avant ou un pare-chocs arrière, cet ensemble répondant à l'objectif ci-dessus exprimé.

A cet effet, il est proposé, en premier lieu, un ensemble comprenant:
- un panneau ayant une face primaire et une face secondaire opposées ;
- un pare-chocs fixé au panneau au moyen d'une patte de fixation, le pare-chocs s'étendant en regard de la face secondaire, la patte de fixation ayant une partie extrême supérieure par laquelle la patte de fixation est fixée sur la face primaire et une partie extrême inférieure par laquelle la patte de fixation est solidaire du pare-chocs ;
la patte de fixation comprenant, entre la partie extrême inférieure et la partie extrême supérieure, une portion en forme de C qui s'étend dans un plan PO parallèle à la face primaire.

Les termes « supérieure » et « inférieure », et autres repères spatiaux font référence à l'ensemble dans sa position d'usage dans le véhicule, en considérant que le véhicule est disposé sur un plan horizontal.

Diverses caractéristiques supplémentaires peuvent être prévues, seules ou en combinaison :
- la portion en forme de C présente un bras supérieur et un bras inférieur, espacés, s'étendant latéralement en regard l'un de l'autre, les bras inférieur et supérieur étant reliés verticalement par une boucle ;
- la patte de fixation comprend une languette en saillie par rapport au pare-chocs, la languette étant reliée au bras inférieur par une queue qui s'étend à partir du bras inférieur dans une direction opposée au panneau ;
- la partie extrême supérieure est fixée sur la face primaire au moyen d'un boulon ;
- le panneau comprend une griffe en saillie par rapport à un bord inférieur du panneau, la griffe comprenant la face primaire ;
- le pare-chocs est fixé au panneau au moyen de deux pattes de fixation ;
- le pare-chocs est un pare-chocs arrière, et le panneau est situé à une limite arrière de la caisse et délimite un espace coffre ;
- le pare-chocs est un pare-chocs avant, et le panneau est situé à une limite avant de la caisse et délimite un compartiment moteur.

Il est proposé, en second lieu, un véhicule comprenant un ensemble comportant un pare-chocs avant ou un pare-chocs arrière tel que décrit précédemment.

D'autres caractéristiques et avantages de l'invention apparaîtront plus clairement et de manière concrète à la lecture de la description ci-après de modes de réalisation, laquelle est faite en référence aux dessins annexés dans lesquels :
- la figure 1 est une vue en perspective d'un véhicule comprenant une caisse sur laquelle sont fixés un pare-chocs avant et un pare-chocs arrière.
- la figure 2 est une vue en perspective d'un ensemble incluant un pare-chocs et un panneau de la caisse sur laquelle est fixé le pare-chocs au moyen de pattes de fixation, avec un médaillon de détail à échelle agrandie.
- la figure 3 est une vue de détail, de face, d'une patte de fixation de l'ensemble de la figure 2.
- la figure 4 est une vue en coupe de l'ensemble selon le plan de coupe IV-IV de la figure 2.
- la figure 5 est une vue de détail, de face, de l'une des pattes de fixation représentée en trait plein dans un état repos et en trait pointillé dans un état déformé.
- la figure 6 est une vue de détail, de côté, de l'une des pattes de fixation représentée en trait plein dans un état repos et en trait pointillé dans un état déformé.

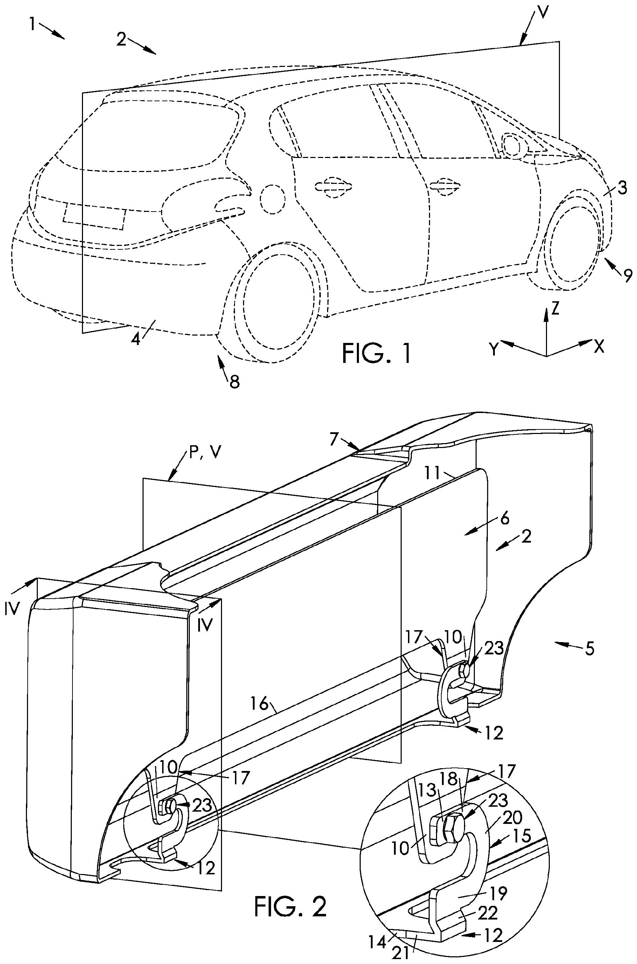

Sur la figure 1 est représenté un véhicule 1 automobile comprenant une caisse 2 sur laquelle sont notamment fixés un pare-chocs 3 avant et un pare-chocs 4 arrière.

Sur les figures 2 à 6 est représenté un ensemble 5 comprenant un panneau 6 de la caisse 2 sur lequel est notamment fixé un pare-chocs 7. La caisse 2 est généralement un ensemble mécano-soudé comprenant le panneau 6. Pour des raisons de clarté, seul le panneau 6 est représenté sur les figures 2 à 6.

Dans la suite de la description, on s'intéressera plus particulièrement au comportement du pare-chocs 7 lors d'un choc extérieur à basse vitesse contre par exemple un autre véhicule ou un élément extérieur. On entend par basse vitesse, une vitesse inférieure à 20 km/h.

Ainsi, sur les figures 2 à 6, le pare-chocs 7 peut être soit un pare-chocs 3 avant soit un pare-chocs 4 arrière.

Dans le cas où le pare-chocs 7 est un pare-chocs 4 arrière, le panneau 6 est situé à une limite 8 arrière de la caisse 2 et délimite généralement un espace coffre au sein duquel sont par exemple stockés des bagages. On considérera, dans ce cas, le comportement du pare-chocs 7 lors d'un choc arrière.

Dans le cas où le pare-chocs 7 est un pare-chocs 3 avant, le panneau 6 est situé à une limite 9 avant de la caisse 2 et délimite généralement un compartiment moteur au sein duquel se trouve notamment un moteur. On considérera, dans ce cas, le comportement du pare-chocs 7 lors d'un choc avant également appelé choc frontal.

On définit par rapport au véhicule 1 un repère orthogonal XYZ comprenant trois axes perpendiculaires deux à deux, à savoir :
- un axe X, définissant une direction longitudinale, horizontale, confondue avec la direction générale de déplacement du véhicule 1,
- un axe Y, définissant une direction transversale, horizontale, qui avec l'axe X définit un plan XY horizontal,
- un axe Z, définissant une direction verticale, perpendiculaire au plan XY horizontal.

Dans la suite de la description et en référence au repère défini ci-dessus, les termes « longitudinal » ou « longitudinalement » font référence à une direction confondue avec l'axe X, les termes « transversal » ou « transversalement » font référence à une direction confondue avec l'axe Y, et les termes « vertical » ou « verticalement » font référence à une direction confondue avec l'axe Z.

Tel qu'illustré sur la figure 1, le véhicule 1 automobile possède un plan V de symétrie parallèle au plan vertical ZX. Tel qu'illustré sur la figure 2, le pare-chocs 7 est également symétrique suivant un plan P de symétrie parallèle au plan vertical ZX, le plan P de symétrie du pare-chocs 7 étant confondu avec le plan V de symétrie du véhicule 1 lorsque le pare-chocs 7 est monté sur la caisse 2 du véhicule 1.

Le pare-chocs 7 est fixé sur le panneau 6 de la caisse 2, ce panneau 6 ayant une face 10 primaire et une face 11 secondaire opposées. Le pare-chocs 7 est fixé au panneau 6 au moyen d'une patte 12 de fixation, le pare-chocs 7 s'étendant en regard de la face 11 secondaire, la patte 12 de fixation ayant une partie 13 extrême supérieure par laquelle la patte 12 est fixée sur la face 10 primaire et une partie 14 extrême inférieure par laquelle la patte 12 est solidaire du pare-chocs 7. La patte 12 de fixation comprend, entre la partie 14 extrême inférieure et la partie 13 extrême supérieure, une portion 15 en forme de C qui s'étend suivant un plan PO parallèle à la face 10 primaire.

Selon le mode de réalisation illustré sur les figures 2 à 6, le pare-chocs 7 est fixé au panneau 6 via deux pattes 12 de fixation symétriques par rapport au plan P de symétrie.

Le pare-chocs 7 est fixé en outre sur la caisse 2 au moyen de dispositifs de fixation complémentaires (non représentés).

Lorsque le pare-chocs 7 subi un choc à basse vitesse, chaque portion 15 en forme de C se déforme, et ainsi emmagasine de l'énergie. Les portions 15 en C permettent ainsi de limiter les efforts exercés par les parties 13 extrêmes supérieures sur les faces 10 primaires et ainsi de réduire considérablement voire totalement les déformations plastiques des faces 10 primaires et plus généralement du panneau 6.

Selon le mode de réalisation illustré sur les figures 2 à 6, le panneau 6 est sensiblement rectangulaire et délimité dans une partie inférieure par un bord 16 inférieur. Le panneau 6 présente en outre deux griffes 17, en saillie, symétriques par rapport au plan de symétrie P, chaque griffe 17 comprenant la face 10 primaire sur laquelle est fixée la partie 13 extrême supérieure d'une patte 12 de fixation.

Selon le mode de réalisation illustré sur les figures 2 à 6, chaque patte 12 de fixation a un profil en forme de point d'interrogation selon un plan YZ. La portion 15 en forme de C présente plus précisément un bras 18 supérieur et un bras 19 inférieur, espacés verticalement. Le bras 18 supérieur et le bras 19 inférieur s'étendent transversalement et en regard l'un de l'autre. Les bras 18, 19 supérieur et inférieur sont reliés par une boucle 20. La boucle 20 s'étend à partir du bras 18 supérieur, en direction du plan de symétrie P, pour ensuite s'éloigner de ce plan de symétrie P et revenir sur le bras 19 inférieur. La patte 12 de fixation comprend en outre une languette 21, en saillie par rapport au pare-chocs 7, qui s'étend longitudinalement en regard du bord 16 inférieur, la languette 21 étant reliée au bras 19 inférieur par une queue 22 qui s'étend à partir du bras 19 inférieur dans une direction opposée au panneau 6.

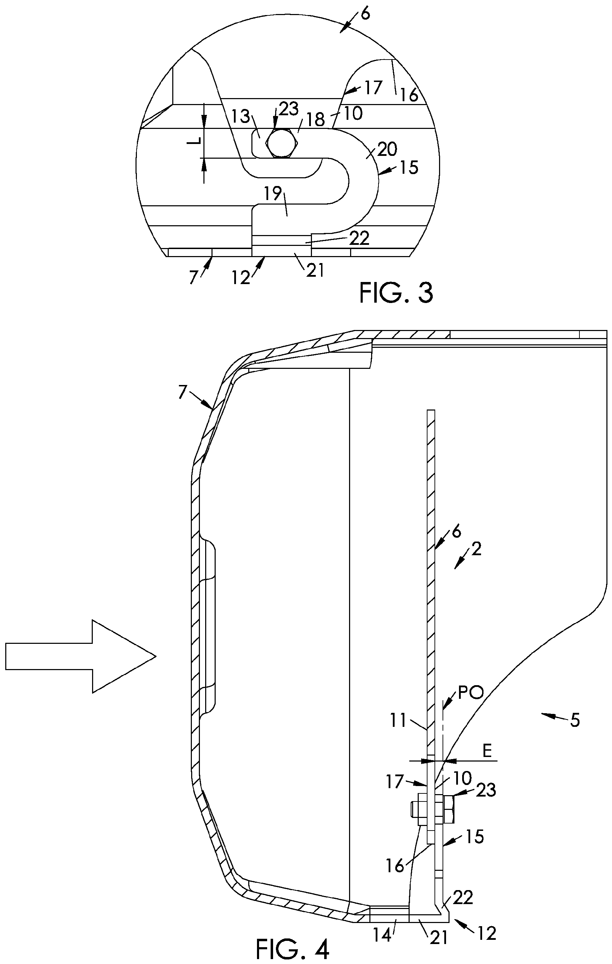

Chaque patte 12 de fixation a une section sensiblement rectangulaire définie par une largeur L et une épaisseur E (représentées sur les figures 3 et 4). La largeur L est comprise entre 10 mm et 50 mm, et avantageusement entre 20 mm et 40 mm. L'épaisseur E est comprise entre 4 mm et 10 mm, et est avantageusement de 7 mm. Le pare-chocs 7 et les pattes 12 de fixation sont monobloc et avantageusement réalisés en matière plastique.

Selon un mode de réalisation non représenté, chaque patte 12 de fixation est rapportée sur le pare-chocs 7.

Selon un mode de réalisation non représenté, chaque patte 12 de fixation peut avoir deux portions 15 en forme de C superposées et opposées par rapport au plan vertical ZX, de sorte à avoir un profil général en S.

Selon le mode de réalisation illustré sur les figures, la partie 13 extrême supérieure est fixée sur la face 10 primaire au moyen d'un boulon 23. Cet exemple n'est en rien limitatif, la partie 13 extrême supérieure pourrait être fixée au moyen de tout autre dispositif de fixation démontable.

Dans la suite de la description, nous allons décrire le comportement du pare-chocs 7 et plus précisément des pattes 12 de fixation lors d'un choc à basse vitesse, subi par le pare-chocs 7.

La flèche représentée sur la figure 4 symbolise la direction d'un choc. On rappelle que lorsque le pare-chocs 7 est considéré comme un pare-chocs 4 arrière, le choc subi par le pare-chocs 7 et plus globalement par le véhicule 1 est un choc arrière. Inversement, lorsque le pare-chocs 7 est considéré comme un pare-chocs 3 avant, le choc subi par le pare-chocs 7 et plus globalement par le véhicule 1 est un choc avant également appelé choc frontal.

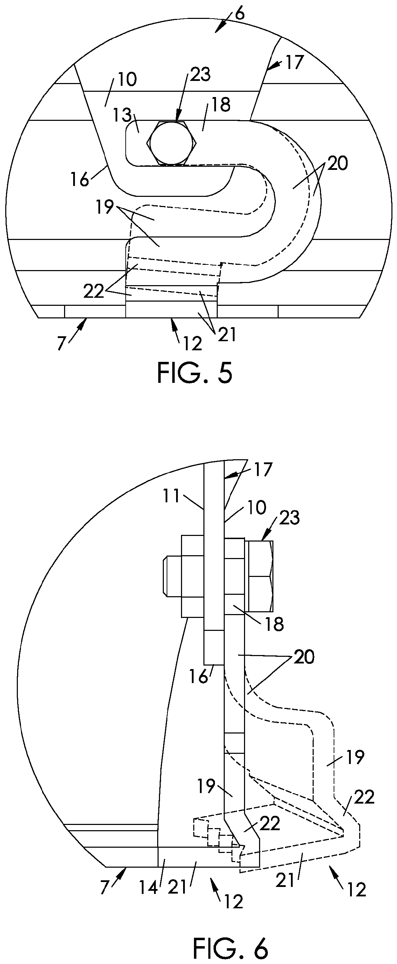

Sur les figures 5 et 6, les pattes 12 de fixation sont représentées en trait plein dans un état repos, et autrement dit, lorsque le pare-chocs 7 ne subi pas de chocs. Les pattes 12 de fixations sont représentées en trait pointillé dans un état déformé, et autrement dit, lors d'un choc subi par le pare-chocs 7.

Lors d'un choc, le déplacement du pare-chocs 7 initié par le choc se répercute sur chaque patte 12 de fixation. On constate que la portion 15 en forme de C se déforme notamment en torsion et autrement dit que la portion 15 en forme de C vrille sous l'effet du choc. En effet, tandis que le bras 19 inférieur se déplace, le bras 18 supérieur reste sensiblement immobile notamment grâce à la fixation de la partie 13 extrême supérieure sur la face 10 primaire du panneau 6. La déformation des portions 15 en forme de C et autrement dit l'énergie emmagasinée par ces portions 15 en forme de C permet d'atténuer les efforts exercés par les parties 13 extrêmes supérieures sur les faces 10 primaires et ainsi de réduire considérablement voire totalement les déformations plastiques des faces 10 primaires et plus généralement du panneau 6.

Selon l'intensité du choc, les pattes 12 de fixation peuvent se déformer élastiquement, plastiquement voir même se rompre. En effet, lors d'un choc de forte intensité qui risquerait d'endommager le panneau 6, les pattes 12 de fixation se rompent jouant dans ce cas-ci la fonction de "pièces fusible" dans le but de protéger le panneau 6.

L'ensemble 5 qui vient d'être décrit offre les avantages suivants.

Premièrement, cet ensemble 5 permet de minimiser les déformations plastiques du panneau 6 lors d'un choc subi par le pare-chocs 7 à basse vitesse. Le fait de réduire considérablement voire totalement les déformations plastiques du panneau 6 permet d'abaisser considérablement le coût des réparations engendrées par le choc.

Deuxièmement, le fait d'intervenir sur la forme des pattes 12 de fixation pour minimiser les déformations plastiques du panneau 6 permet de s'astreindre de l'ajout d'éléments capables d'absorber de l'énergie lors du choc tels qu'un amortisseur au bénéfice de la consommation de carburant du véhicule 1 et de la réduction des émissions de gaz polluants, cela étant d'autant plus vrai lorsque le pare-chocs 7 et les pattes 12 de fixation sont monobloc et réalisés en matière plastique.

## Revendications

1. Ensemble (5) comprenant:
- un panneau (6) ayant une face (10) primaire et une face (11) secondaire opposées ;
- un pare-chocs (7) fixé au panneau (6) au moyen d'une patte (12) de fixation, le pare-chocs (7) s'étendant en regard de la face (11) secondaire, la patte (12) de fixation ayant une partie (13) extrême supérieure par laquelle la patte (12) de fixation est fixée sur la face (10) primaire et une partie (14) extrême inférieure par laquelle la patte (12) de fixation est solidaire du pare-chocs (7);
**caractérisé en ce que** la patte (12) de fixation comprend, entre la partie (14) extrême inférieure et la partie (13) extrême supérieure, une portion (15) en forme de C qui s'étend dans un plan PO parallèle à la face (10) primaire.

2. Ensemble (5) selon la revendication 1, **caractérisé en ce que** la portion (15) en forme de C présente un bras (18) supérieur et un bras (19) inférieur, espacés, s'étendant latéralement en regard l'un de l'autre, les bras (18, 19) inférieur et supérieur étant reliés verticalement par une boucle (20).

3. Ensemble (5) selon la revendication 2, **caractérisé en ce que** la patte (12) de fixation comprend une languette (21) en saillie par rapport au pare-chocs (7), la languette (21) étant reliée au bras (19) inférieur par une queue (22) qui s'étend à partir du bras (19) inférieur dans une direction opposée au panneau (6).

4. Ensemble (5) selon l'une quelconque des revendications précédentes, **caractérisé en ce que** la partie (13) extrême supérieure est fixée sur la face (10) primaire au moyen d'un boulon (23).

5. Ensemble (5) selon l'une quelconque des revendications précédentes, **caractérisé en ce que** le panneau (6) comprend une griffe (17) en saillie par rapport à un bord (16) inférieur du panneau (6), la griffe (17) comprenant la face primaire (10).

6. Ensemble (5) selon l'une quelconque des revendications précédentes, **caractérisé en ce que** le pare-chocs (7) est fixé au panneau (6) au moyen de deux pattes (12) de fixation.

7. Ensemble (5) selon l'une quelconque des revendications précédentes, **caractérisé en ce que** le pare-chocs (7) est un pare-chocs (4) arrière, et le panneau (6) est situé à une limite (8) arrière de la caisse (2) et délimite un espace coffre.

8. Ensemble (5) selon l'une des revendications 1 à 6, **caractérisé en ce que** le pare-chocs (7) est un pare-chocs (3) avant, et le panneau (6) est situé à une limite (9) avant de la caisse (2) et délimite un compartiment moteur.

9. Véhicule (1) comprenant un ensemble (5) selon l'une des revendications 7 ou 8.

## Patentansprüche

1. Einheit (5), umfassend:
- eine Platte (6) mit einer primären Seite (10) und einer gegenüberliegenden sekundären Seite (11) ;
- einen Stoßdämpfer (7), der an der Platte (6) mit Hilfe einer Befestigungsklemme (12) befestigt ist, wobei sich der Stoßdämpfer (7) gegenüber der sekundären Seite (11) erstreckt, wobei die Befestigungsklemme (12) einen äußersten oberen Teil (13), mit dem die Befestigungsklemme (12) an der primären Seite (10) befestigt ist, und einen äußersten unteren Teil (14) umfasst, mit dem die Befestigungsklemme (12) mit dem Stoßdämpfer (7) verbunden ist;
**dadurch gekennzeichnet, dass** die Befestigungsklemme (12) zwischen dem äußersten unteren Teil (14) und dem äußersten oberen Teil (13) einen C-förmigen Abschnitt (15) umfasst, der sich in einer Ebene PO parallel zur primären Seite (10) erstreckt.

2. Einheit (5) nach Anspruch 1, **dadurch gekennzeichnet, dass** der C-förmige Abschnitt (15) einen oberen Arm (18) und einen unteren Arm (19), die beabstandet sind, aufweist, die sich seitlich einander gegenüberliegend erstrecken, wobei der untere und der obere Arm (18, 19) vertikal durch eine Schleife (20) verbunden sind.

3. Einheit (5) nach Anspruch 2, **dadurch gekennzeichnet, dass** die Befestigungsklemme (12) eine Lasche (21) umfasst, die in Bezug zum Stoßdämpfer (7) herausragt, wobei die Lasche (21) mit dem unteren Arm (19) durch ein Endstück (22) verbunden ist, das sich vom unteren Arm (19) in eine zur Patte (6) entgegengesetzte Richtung erstreckt.

4. Einheit (5) nach einem der vorhergehenden Ansprüche, **dadurch gekennzeichnet, dass** der äußerste obere Teil (13) an der primären Seite (10) mit Hilfe eines Bolzens (23) befestigt ist.

5. Einheit (5) nach einem der vorhergehenden Ansprüche, **dadurch gekennzeichnet, dass** die Platte (6) einen Griff (17) umfasst, der in Bezug zu einem unteren Rand (16) der Platte (6) herausragt, wobei der Griff (17) die primäre Seite (10) umfasst.

6. Einheit (5) nach einem der vorhergehenden Ansprüche, **dadurch gekennzeichnet, dass** der Stoßdämpfer (7) an der Platte (6) mit Hilfe von zwei Befestigungsklemmen (12) befestigt ist.

7. Einheit (5) nach einem der vorhergehenden Ansprüche, **dadurch gekennzeichnet, dass** der Stoßdämpfer (7) ein hinterer Stoßdämpfer (4) ist, und die Platte (6) an einer hinteren Grenze (8) des Karosseriegehäuses (2) angeordnet ist und einen Kofferraum begrenzt.

8. Einheit (5) nach einem der Ansprüche 1 bis 6, **dadurch gekennzeichnet, dass** der Stoßdämpfer (7) ein vorderer Stoßdämpfer (3) ist, und die Platte (6) an einer vorderen Grenze (9) des Karosseriegehäuses (2) angeordnet ist und einen Motorraum begrenzt.

9. Fahrzeug (1), umfassend eine Einheit (5) nach einem der Ansprüche 7 oder 8.

## Claims

1. An assembly (5) including:
- a panel (6) having a primary face (10) and a secondary face (11) which are opposite one another;
- a bumper (7) fixed to the panel (6) by means of a fixing lug (12), the bumper (7) extending facing the secondary face (11), the fixing lug (12) having an extreme upper part (13) by means of which the fixing lug (12) is fixed to the primary face (10) and an extreme lower part (14) by means of which the fixing lug (12) is secured to the bumper (7);
**characterized in that** the fixing lug (12) includes, between the extreme lower part (14) and the extreme upper part (13), a C-shaped portion (15) which extends in a plane PO parallel to the primary face (10).

2. The assembly (5) according to claim 1, **characterized in that** the C-shaped portion (15) has an upper arm (18) and a lower arm (19), which are spaced apart, extending laterally facing one another, the lower and upper arms (18, 19) being connected vertically by a loop (20).

3. The assembly (5) according to claim 2, **characterized in that** the fixing lug (12) includes a tongue (21) projecting with respect to the bumper (7), the tongue (21) being connected to the lower arm (19) by a tail (22) which extends from the lower arm (19) in an opposite direction to the panel (6).

4. The assembly (5) according to any one of the preceding claims, **characterized in that** the upper extreme part (13) is fixed on the primary face (10) by means of a bolt (23).

5. The assembly (5) according to any one of the preceding claims, **characterized in that** the panel (6) includes a claw (17) projecting with respect to a lower edge (16) of the panel (6), the claw (17) including the primary face (10).

6. The assembly (5) according to any one of the preceding claims, **characterized in that** the bumper (7) is fixed to the panel (6) by means of two fixing lugs (12).

7. The assembly (5) according to any one of the preceding claims, **characterized in that** the bumper (7) is a rear bumper (4), and the panel (6) is situated at a rear limit (8) of the body (2) and delimits a boot space.

8. The assembly (5) according to one of claims 1 to 6, **characterized in that** the bumper (7) is a front bumper (3), and the panel (6) is situated at a front limit (9) of the body (2) and delimits an engine compartment.

9. A vehicle (1) including an assembly (5) according to one of claims 7 or 8.
